# EUROPÄISCHE PATENTANMELDUNG

(11) **EP 3 210 506 A1**
(43) Veröffentlichungstag der Anmeldung: **30.08.2017**
(21) Anmeldenummer: 16157854.7
(22) Anmeldetag: 29.02.2016
(51) Int. Cl.: A47J 31/44

(54) **MILCHSCHÄUMERSYSTEM UND BETRIEBSVERFAHREN**

(71) Anmelder: Qbo Coffee GmbH, 8304 Wallisellen (CH)
(72) Erfinder: KROOS, Friedrich, 8606 Greifensee (CH)
(74) Vertreter: Frei Patent Attorneys

(57) **Zusammenfassung**

Ein Milchschäumersystem gemäss der vorliegenden Erfindung weist eine Zahnradpumpe (7) auf, die eingangsseitig mindestens mit einer Milchzuführleitung verbunden ist, welche ihrerseits im Betriebszustand mit einem mit Milch füllbaren Milchgefäss verbunden ist, bspw. indem es in dieses hinein ragt. Die Zahnradpumpe saugt Milch via die Milchzuführleitung aus dem Milchgefäss an. Das System weist ausserdem eine Zuführleitung für Wasser und/oder Dampf zur Zahnradpumpe auf, bspw. um diese nach Gebrauch zu spülen, oder auch (insbesondere durch die Zuführung von Dampf) um die geförderte Milch zu erwärmen. Erfindungsgemäss ist das Milchschäumersystem eingerichtet, unter vorgegebenen Voraussetzungen vor einer Förderung von Milch die Zahnradpumpe mittels via die Zuführleitung gefördertem Wasser oder Wasserdampf zu benetzen.

## Beschreibung

Die Erfindung betrifft das Gebiet der Geräte zum Zubereiten von Getränken. Sie betrifft insbesondere ein System zum Erzeugen von Milchschaum und zum Zubereiten von Milchgetränken oder -getränkebestandteilen.

Milchschäumergeräte als integrierte Module von Kaffeemaschinen oder als an Kaffeemaschinen andockbare, separate Geräte sind bekannt. EP 2 047 779 zeigt eine Kaffeemaschine mit andockbarem Milchmodul, wobei heisser Dampf aus der Kaffeemaschine genutzt wird, um nach dem Venturi-Prinzip aus einem Gefäss des Milchmoduls angesaugte Milch zu schäumen. Beispielsweise die EP 2 326 224 zeigt einen Milchschäumer, der eine Zahnradpumpe als zentrales schaumerzeugendes Element aufweist. Eingangsseitig der Zahnradpumpe saugt diese Luft und Milch an, die gleichzeitig mit der Förderung durch die Zahnräder geschäumt wird und ausgangsseitig als geschäumte Milch abgegeben wird. Optional kann in der Zahnradpumpe zusätzlich Wasserdampf zugeführt werden, damit die abgegebene geschäumte Milch warm ist.

Auch beispielsweise aus der internationalen Patentanmeldung PCT/EP2015/071792 oder der internationalen Patentanmeldung PCT/EP2015/071794 ist ein an eine Grundeinheit einer Getränkezubereitungsmaschine andockbares Milchschäumergerät mit einer Zahnradpumpe bekannt, welche die Milch aus einem Milchgefäss ansaugt und, sofern eingangsseitig auch Luft zugeführt wird, auch schäumt.

Bei Systemen wie den vorstehend genannten, bei welchen die Zahnradpumpe zu fördernde Milch ansaugt, muss die Zahnradpumpe eingangsseitig ein Vakuum erzeugen, welches mindestens der maximalen Höhe der Flüssigkeitssäule der anzusaugenden Milch entspricht - in der Praxis bspw. entsprechend der Höhe der Zahnradpumpe über dem Boden des Milchgefässes, aus dem angesaugt wird. Bei einer solchen Höhe von 20 cm ergibt das bspw. immerhin einen Unterdruck im Vergleich zum Luftdruck von 20 mbar. Ausserdem ist ausgangsseitig oft eine Verengung (Düse) vorhanden, so dass ausgangsseitig der Pumpe zusätzlicher Widerstand vorhanden ist - was die von der Pumpe herzustellende Druckdifferenz noch einmal leicht erhöhen kann. Das stellt in der Summe sehr hohe Anforderungen an die Dichtigkeit der Zahnradpumpe, die, da es um Lebensmittel geht, selbstverständlich nicht geschmiert sein darf. Bei einer auch nur sehr kleinen Leckage, beispielswiese entlang des Aussenumfangs der Zahnräder oder entlang deren Stirnflächen (jeweils zwischen Pumpengehäuse und Zahnrädern), oder zwischen den Zahnrädern, strömt sofort Luft von der Hochdruckseite (Ausgangsseite) auf die Niederdruckseite (Eingangsseite) und gleicht sofort Druckunterschiede aus. Verstärkt wird dieses Problem durch mögliche Abnutzungen der ineinander eingreifenden Zahnräder, die sich im Langzeitgebrauch ergeben können und solche kleinen Leckagen auch während des Gebrauchs erzeugen können.

Weiterhin ist je nach Anwendungsgebiet zu fordern, dass die Zahnradpumpe gereinigt werden muss und dafür auch auf täglicher Basis auseinandergenommen wird. Komplexe Dichtsysteme etc. scheiden daher für die Zahnradpumpe nebst Kostengründen auch wegen der Anforderung an eine einfache Reinigung durch den Benutzer aus. Häufiges Auseinanderbauen und Zusammenbauen sind der Präzision der Einzelkomponenten nicht zuträglich.

Es ist daher eine Aufgabe der vorliegenden Erfindung, ein Milchschäumersystem mit Zahnradpumpe zu schaffen, welches Nachteile des Standes überwindet und welches insbesondere ermöglicht, die Anforderungen an die Toleranzen der Zahnradpumpe zu verringern - und dadurch die Herstellungskosten zu senken - und/oder die Empfindlichkeit gegenüber Abnutzungen bei Langzeitgebrauch zu verringern, auch wenn ein Milchgefäss, aus welchem die Milch anzusaugen ist, tiefer liegt als die Zahnradpumpe.

Diese Aufgabe wird durch die Erfindung gelöst, wie sie in den Patentansprüchen definiert ist.

Ein Milchschäumersystem gemäss der vorliegenden Erfindung weist eine Zahnradpumpe auf, die eingangsseitig mindestens mit einer Milchzuführleitung verbunden ist, welche im Betriebszustand mit einem mit Milch füllbaren Milchgefäss verbunden ist, bspw. indem sie in dieses hinein ragt, um die Milch anzusaugen. Das System weist ausserdem eine Zuführleitung für Wasser und/oder Dampf zur Zahnradpumpe auf, bspw. um diese nach Gebrauch zu spülen, oder auch (insbesondere durch die Zuführung von Dampf) um die geförderte Milch zu erwärmen. Erfindungsgemäss ist das Milchschäumersystem eingerichtet, unter vorgegebenen Voraussetzungen vor einer Förderung von Milch die Zahnradpumpe mittels via die Zuführleitung gefördertem Wasser oder Wasserdampf zu benetzen.

Dieser Ansatz beruht auf der Erkenntnis, dass eine Flüssigkeit in der Zahnradpumpe eine gewisse Dichtwirkung, beispielsweise entlang der Stirnfläche der Zahnräder und entlang des Aussenumfangs der Zahnräder erzeugt. Diese Dichtwirkung tritt durch die Milch ein, sobald die Zahnradpumpe Milch gefördert hat. Aufgrund des erfindungsgemässen Ansatzes funktioniert sie - mittels Wasser - auch, wenn die Zahnradpumpe bspw. bei einer erstmaligen Inbetriebnahme nach einer durchgeführten Reinigung oder nach längerem Nichtgebrauch an sich trocken wäre.

Durch den erfindungsgemässen Ansatz muss die Zahnradpumpe im trockenen Zustand also nicht Flüssigkeit über eine Flüssigkeitssäule ansaugen, sondern wird durch die Zuführmittel mit Wasser und/oder Dampf benetzt, ohne die Notwendigkeit einen eigenen Unterdruck aufzubauen. Das heisst, die Förderung des Wassers und/oder Wasserdampfs in die Zahnradpumpe zwecks Benetzung erfolgt nicht durch die Wirkung der Zahnradpumpe - sie kann optional geschehen, während die Zahnradpumpe noch still steht - sondern durch andere Mittel des Systems, bspw. durch eine Wasserpumpe und/oder durch den Dampfdruck, eventuell auch durch ein geeignetes Gefälle.

Es hat sich gezeigt, dass durch den erfindungsgemässen Ansatz aufgrund der Adhäsionseigenschaften des Wassers und der daraus folgenden dichtenden Wirkung ermöglicht wird, einen im Vergleich zum Stand der Technik markant höheren Unterdruck aufzubauen. Daher sind erheblich geringe Anforderungen an die Bauteiltoleranzen erforderlich, um dann die Milch aus dem Milchbehälter anzusaugen. Dies fällt sogar noch verstärkt ins Gewicht, wenn wie in bevorzugten Ausführungsformen vorgesehen eingangsseitig der Zahnradpumpe auch eine Luftzufuhr vorhanden ist, bspw. wenn zusätzlich ein Luftventil geöffnet wird, um auch Luft anzusaugen.

Der Umstand, dass das System eingerichtet ist, die Zahnradpumpe unter vorgegebenen Voraussetzungen zu benetzen, bedeutet, dass nicht nur die Möglichkeit/Eignung bestünde, die entsprechenden Schritte durchzuführen, sondern dass im System konkrete Massnahmen angelegt sind, um diese Schritte bei bestimmungsgemässer Bedienung durchzuführen. Insbesondere ist eine Steuerungseinheit des Systems programmiert, unter den vorgegebenen Voraussetzungen die Zahnradpumpe bzw. die Zahnräder der Zahnradpumpe zu benetzen, bevor die Milch gefördert wird, wenn ein Benutzer direkt oder indirekt (bspw. durch Anwahl eines entsprechenden Programms) die Förderung von Milch angefragt hat und damit auslöst. Die Auslösung durch den Benutzer wird unter den vorgegebenen Voraussetzungen also zunächst zu einer Benetzung der Zahnradpumpe und erst dann zu einer Förderung (ggf. verbunden mit Schäumung und/oder Erwärmung) der Milch führen.

Das Milchgefäss ist beispielsweise Teil des Milchschäumersystems und ist im Allgemeinen weiter unten als die Zahnradpumpe angeordnet, beispielsweise vertikal unterhalb der Zahnradpumpe. In einer Ausführungsform ist das Milchgefäss becherartig ausgebildet, und die Milchzuführleitung ragt von oben in das Milchgefäss hinein; sie ist dann endseitig offen, wobei diese endseitige Öffnung im Wesentlichen am Boden des Milchgefässes angeordnet ist. Auch Systeme mit einem Milchgefäss, welches unterseitig eine verschliessbare Ablauföffnung aufweist, die ihrerseits über eine Steigleitung als Milchzuführleitung mit der Eingangsseite der Zahnradpumpe verbunden ist, sind nicht ausgeschlossen.

Die vorgegebenen Voraussetzungen, unter denen die Zahnradpumpe vor einer Förderung von Milch benetzt wird können sein:
A. Benetzung nur, wenn das System nach dem letzten Betrieb der Zahnradpumpe eingeschaltet wurde, aus einem Standby- oder Schlafmoduls aufgeweckt wurde, oder wenn das Milchschäumergerät mit der Zahnradpumpe von einer Grundeinheit der Getränkezubereitungsmaschine entfernt wurde.
B. Benetzung nur, wenn seit dem letzten Betrieb der Zahnradpumpe mehr als eine vorgegebene Zeit (bspw. eine vorgegebene Zeit zwischen 10 min und 120 min) vergangen ist
C. Benetzung nur, wenn durch eine Messung festgestellt wurde, dass nicht ausreichend Feuchtigkeit in der Zahnradpumpe vorhanden ist. Eine solche Messung kann bspw. eine hygroskopische Messung im Flüssigkeitspfad unmittelbar vor oder unmittelbar nach der Zahnradpumpe sein, oder auch eine indirekte Messung, bspw. über den Stromkonsum der Zahnradpumpe bei einem kurzen Einschalten (charakteristisch für den mechanischen Widerstand), das Schwingungsverhalten (akustische Eigenschaften), etc.
D. Benetzung nur unter vom Benutzer vorgebbaren Bedingungen, bspw. durch aktive Auslösung durch den Benutzer, wenn er feststellt, dass die Pumpe nicht funktioniert.

Auch Kombinationen sind möglich, bspw. Durchführung einer Messung gemäss C. nur, wenn Bedingung A. erfüllt ist oder Bedingung B. erfüllt ist, eine und- oder oder-Verknüpfung von Bedingungen A. und B., etc. Weiter sind auch kompliziertere empirische Modelle, welche die in Speichermitteln einer Steuerung speicherbare Vorgeschichte berücksichtigen, möglich, etc. In all diesen Beispielen findet die Benetzung abhängig von einer vorgegebenen Bedingung statt oder nicht statt. Darüber hinaus besteht aber auch die Möglichkeit:
E. Benetzung vor jedem Betrieb der Zahnradpumpe (d.h. vorgegebene Voraussetzung ist immer erfüllt).

Die Zahnräder der Zahnradpumpe sind bspw. mit einem temperaturbeständigen, reibungs- und adhäsionsarmen Material beschichtet, bspw. einem fluorhaltigen Polymer, insbesondere einem Perfluoralkoxy-Polymer (PFA). Sie können auch komplett aus einem solchen Material oder aus einem anderen Kunstoff bestehen und können in einem Spritzgussverfahren oder mittels anderer Herstellungsverfahren hergestellt sein. Aufgrund des erfindungsgemässen Vorgehens ist das eine besonders vorteilhafte Option, denn solche Beschichtungen bzw. Materialien sorgen für einen geräuscharmen Betrieb. Aufgrund ihrer relativ geringen Festigkeit treten bei der Verwendung von PFA oder ähnlicher Materialien aber auch besonders markante Schwindungen und Abweichungen von vorgegebenen Massen auf, was durch das erfindungsgemässe Vorgehen kompensierbar ist.

Die zum Benetzen verwendete Wassermenge kann relativ klein sein, auch geringe Volumina können schon für eine ausreichende Benetzung sorgen. In der Praxis zeigt sich, dass je nach Pumpengeometrie und Anordnung der zuführenden Leitungen Volumina zwischen 1 ml und 10 ml, insbesondere von 6 ml oder weniger ausreichend sind (die angegebenen Volumina sind Flüssigkeitsvolumina, d.h. im Falle von Wasserdampf das Volumen des kondensierten Dampfs). Der Zusatz einer so kleinen Wassermenge hat bei den für Milchgetränke und milchhaltige Brühgetränke üblichen Getränkemengen keinen wesentlichen Einfluss auf die Getränkequalität.

Eingangsseitig der Zahnradpumpe kann wie bereits erwähnt ein Luftzuführmittel vorhanden sein, bspw. eine Luftzuführleitung mit Luftzuführventil. Eine solche Luftzuführung eingangsseitig der Zahnradpumpe kann ein- und ausschaltbar ausgebildet sein; im ausgeschalteten Zustand dieser Luftzuführung oder wenn eine solche gar nicht vorhanden ist, dient die Zahnradpumpe der blossen Förderung der Milch.

In Ausführungsformen wird das Milchschäumersystem durch eine Getränkezubereitungsmaschine gebildet, welches nebst einem Milchschäumergerät auch eine Grundeinheit aufweist, die als Kaffeemaschine ausgebildet ist, insbesondere mit einem Brühmodul zur Aufnahme einer mit Kaffeepulver gefüllten Portionspackung (Kapselkaffeemaschine). Das Milchschäumergerät ist an die Grundeinheit andockbar und von dieser her über eine entsprechende Schnittstelle mit dem Wasser und/oder Wasserdampf versorgbar. Auch die Stromversorgung und/oder Ansteuerung der Zahnradpumpe kann von der Grundeinheit her erfolgen.

In Ausführungsformen kann die eine Luftzuführung der genannten Art eingangsseitig der Zahnradpumpe via eine Luftabgabestelle der Grundeinheit erfolgen, wobei dann Luft von einer maschineninternen, insbesondere elektronisch gesteuerten Ventileinheit her an das Milchschäumergerät, bspw. gegebenenfalls dessen Zahnradpumpe, geregelt abgegeben werden kann. In solchen Ausführungsformen kann das Milchschäumergerät zusätzlich einen Luftanschluss für die von der Grundeinheit her kommende, an die Milchschäumeinheit abzugebende Luft aufweisen.

Auf einem Pfad von von der Zahnradpumpe geförderter Milch kann das Milchschäumersystem, insbesondere das Milchschäumergerät, ausserdem eine Mischdüse aufweisen, welcher diese Milch, der Wasserdampf sowie Luft zuführbar sind. Eine solche Mischdüse kann insbesondere so ausgebildet sein, dass einströmender Dampf - der vom Dampfanschluss in die Mischdüse gelangt - in an sich bekannter Art eine Saugwirkung erzielt. Durch diese kann das Ansaugen von weiterer Luft und die Durchmischung mit der Mischdüse zugeführter Milch erfolgen, wodurch - ergänzend oder alternativ zur Schäumung durch die Zahnradpumpe - geschäumte Milch erzeugbar ist, welche aufgrund der vom Wasserdampf abgegebenen Wärme warm ist.

Wenn bei einem System mit Mischdüse kalte geschäumte oder ungeschäumte Milch zubereitet werden soll, kann vorgesehen sein, dass dann kein Dampf in diese geleitet wird. Die Mischdüse dient in diesem Fall nur dem Durchleiten der geschäumten Milch.

Ergänzend oder alternativ zu einer Mischdüse der genannten Art kann eine Zuführung von Wasserdampf auch direkt in die Zahnradpumpe oder an einem anderen Ort des Milchpfades, bspw. unmittelbar eingangsseitig der Zahnradpumpe oder ausgangsseitig dieser angeordnet sein.

Die erfindungsgemäss für die Benetzung verwendete Zuführleitung für Wasser und/oder Wasserdampf kann durch die Dampfzuführung - die falls vorhanden in eine Mischdüse, oder an einen anderen Ort entlang des Milchpfads, bspw. die Zahnradpumpe selbst, mündet - und/oder sie kann durch eine Zuführleitung gebildet werden, welche auch für Reinigungswasser bzw. den Reinigungsdampf zum Reinigen der Zahnradpumpe verwendet wird. Eine solche kann eingangsseitig der Zahnradpumpe in die Milchleitung münden und dem Durchspülen und unter Umständen auch Entkeimen der Zahnradpumpe inklusive Zu- und Wegführleitungen dienen. Zwischen dieser Leitung und der Eingangsseite der Zahnradpumpe kann ein Ventil, bspw. Lippenventil, vorhanden sein, das sich selbsttätig schliesst wenn im Bereich vor der Zahnradpumpe ein geringerer Druck vorhanden ist als in der Leitung, wie das während des Betriebs der Zahnradpumpe ohne Zuführung von Reinigungswasser oder -dampf in der Regel der Fall sein wird.

Die Grundeinheit - beispielsweise Kaffeemaschine - weist bspw. einen Wasserbehälter, eine Wasserpumpe und Wassererhitzungsmittel (Durchlauferhitzer, Boiler) auf. Weiter ist eine Brühkammer zum Zubereiten des Heissgetränks aus erhitztem Wasser durch Extraktion aus einem Extraktionsgut vorhanden. Die Grundeinheit kann ausserdem eine Elektronikeinheit (Steuerungseinheit) aufweisen, welche die vorstehend diskutierte Ansteuerung und ggf. einen Regler der Ventileinheit entweder beinhaltet oder - wenn diese Teil des Milchschäumergeräts ist - mit ihr in Kommunikationsverbindung steht. Eingaben des Benutzers erfolgen bevorzugt an einer Eingabestelle dieser Elektronikeinheit, ebenso erfolgt gegebenenfalls durch diese eine Erkennung einer Kaffeekapsel mit dem Extraktionsgut. Auch die Steuerung des Wasserdampfflusses erfolgt durch dieses Elektronikmodul.

Ebenfalls Gegenstand der Erfindung ist ein Verfahren zum Betreiben eines Milchschäumersystems mit Zahnradpumpe, bei welchem die Zahnradpumpe vor der Förderung von Milch unter definierten Voraussetzungen benetzt wird.

Nachfolgend werden Ausführungsbeispiele der Erfindung anhand von Figuren beschrieben. In den Figuren bezeichnen gleiche Bezugszeichen gleiche oder analoge Elemente. Es zeigen:
- Fig. 1: eine Ansicht eines Geräts zum Zubereiten von geschäumter Milch (Milchschäumergeräts);
- Fig. 2: eine Explosionsdarstellung des Milchschäumergeräts;
- Fig. 3: eine Explosionsdarstellung der Milchschäumeinheit des Milchschäumergeräts;
- Fig. 4: eine Ansicht der entlang einer horizontalen Ebene angeschnittenen Milchschäumeinheit;
- Fig. 5: eine teilweise Ansicht der Dichtung der Milchschäumeinheit mit Elementen der Zahnradpumpe;
- Fig. 6: eine Ansicht des entlang einer horizontalen Ebene angeschnittenen oberen Grundgehäuseteils der Milchschäumeinheit;
- Fig. 7: eine Ansicht des oberen Grundgehäuseteils von unten;
- Fig. 8: eine Ansicht des entlang einer vertikalen Ebene angeschnittenen oberen Grundgehäuseteils;
- Fig. 9: eine Ansicht einer Getränkezubereitungsmaschine; und
- Fig. 10: ein Schema eines erfindungsgemässen Milchschäumersystems.

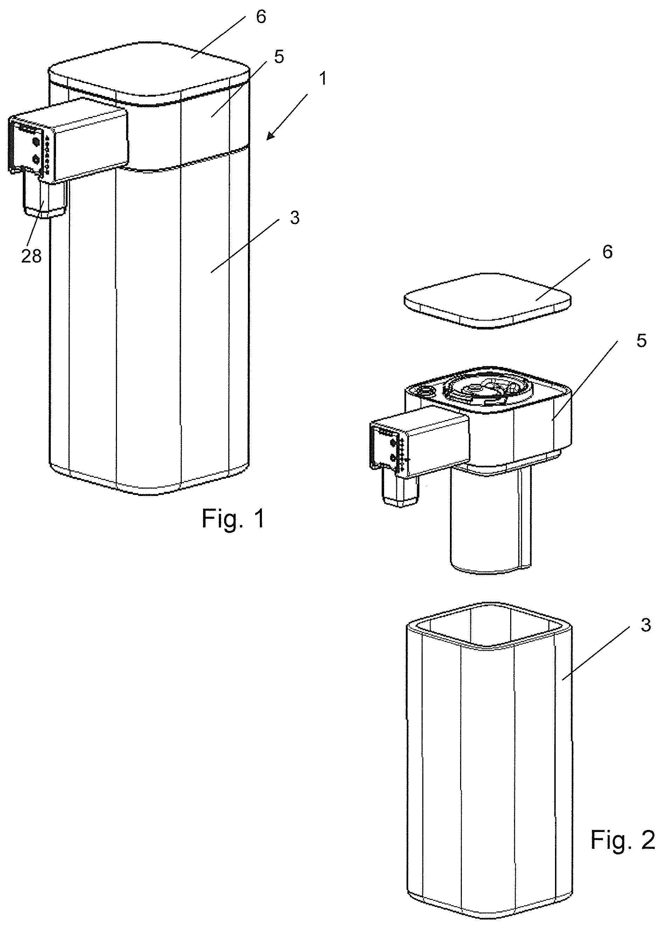

Das Gerät 1 zum Zubereiten von geschäumter Milch (Milchschäumergerät) ist als Ganzes in **Figur 1** dargestellt. **Figur 2** zeigt eine Explosionsdarstellung seiner Teile. Das Gerät 1 weist einen Milchbehälter 3, eine Milchschäumeinheit 5 und einen Deckel 6 auf.

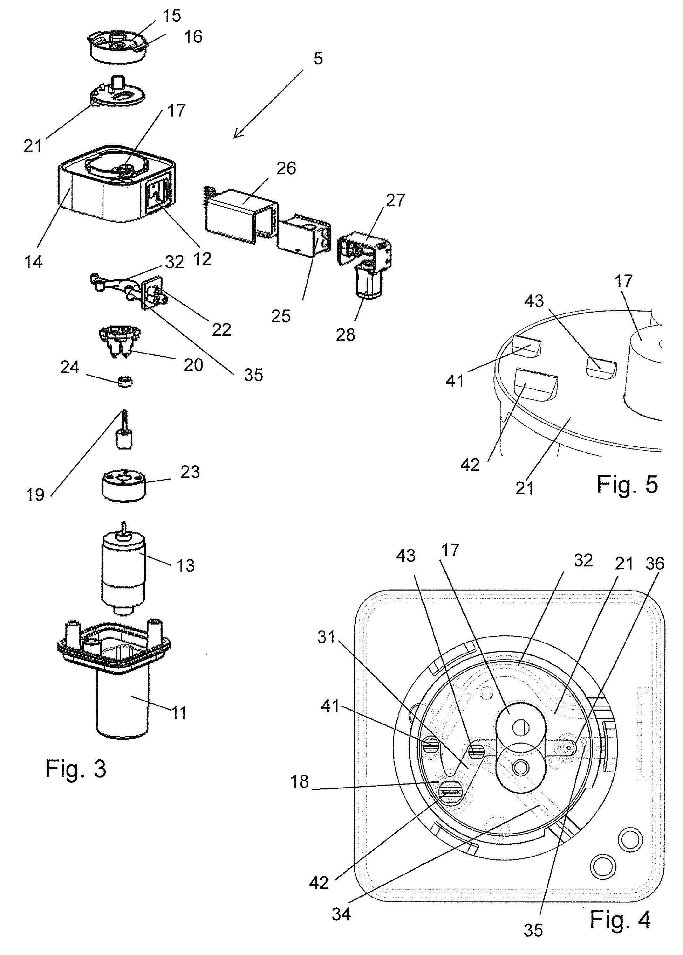

Die Elemente der Milchschäumeinheit 5 sind in der **Figur 3** in einer Explosionsdarstellung dargestellt. Ein unteres Grundgehäuseteil 11 trägt einen zur Zahnradpumpe gehörenden Elektromotor 13 sowie ein oberes Grundgehäuseteil 14. Im Grundgehäuse ist ein seitliches Fenster 12 ausgebildet.

Das obere Grundgehäuseteil 14 bildet eine ungefähr kreiszylindrische Wanne in welcher Zahnräder 17 einer Zahnradpumpe angeordnet sind. Die Zahnräder 17 der Zahnradpumpe werden über eine Welle 19 angetrieben, die mit dem Elektromotor 13 verbunden ist. Eine Dichtung 21 dichtet die Wanne nach unten ab.

Die Zahnradpumpe kann zusätzlich zu den Zahnrädern, der Welle und dem Elektromotor auch ein eigenes Gehäuse aufweisen, oder ein solches kann in das Grundgehäuse oder andere Teile, beispielsweise einen Milchschäumeinheit-Deckel 16, integriert sein. Im dargestellten Ausführungsbeispiel ist der Milchschäumeinheit-Deckel 16 so ausgeformt, dass sich zwischen der Dichtung 21 und dem Milchschäumeinheit-Deckel 16 aufgrund einer Wölbung 15 (auch in Fig. 12 gut sichtbar) eine die Zahnräder 17 umfassende Pumpenkammer bildet. Die Dimensionierung der Pumpenkammer ist passgenau auf die äusseren Abmessungen der Zahnräder abgestimmt, welche ihrerseits passgenau ineinander passen.

Von der Ebene der Zahnradpumpe nach unten erstreckt sich ein Milchansaugrohr 18 (in Figur 3 nicht dargestellt), das im zusammengesetzten Zustand des Geräts 1 in den Milchbehälter 3 hinein und bis fast an dessen Boden ragt.

Am Grundgehäuse 11, 14 ist auch eine ansteuerbare Ventileinheit 20 für die in den eingangsseitig der Zahnradpumpe in den Milchschäumer gelangende Luft befestigt. Ebenfalls in Fig. 3 sichtbar sind ein Abstandhalter 23 und ein Motordichtungselement 24.

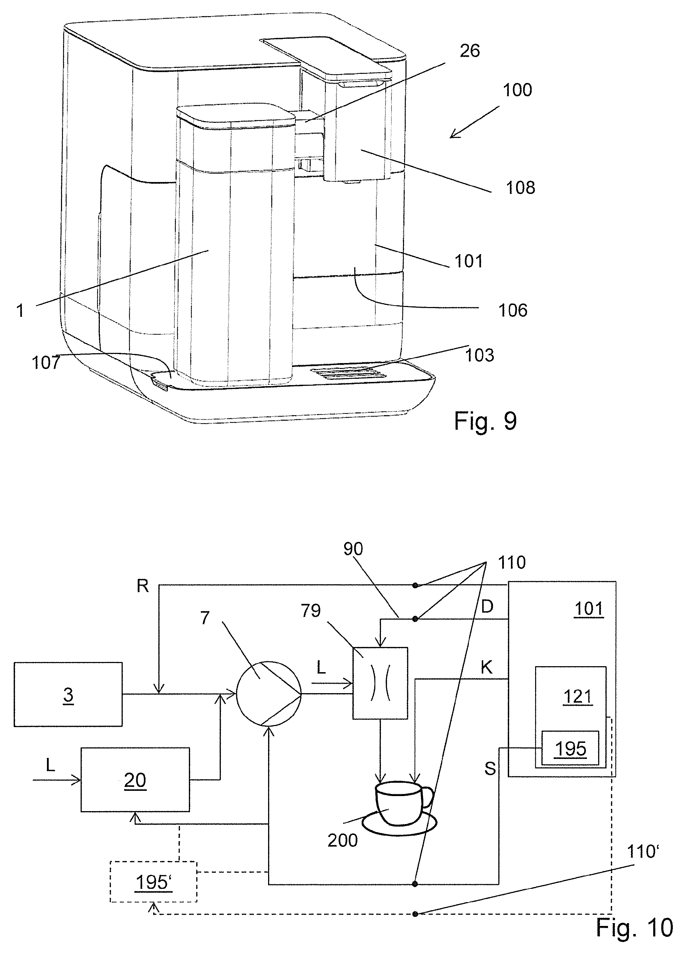

Unterseitig der Zahnradpumpe ist weiter ein Anschlussformteil 22 vorhanden. Dieses schliesst das Fenster 12 ab und bildet gleichzeitig eine Durchführung zur Verbindung zwischen den am Grundgehäuse befestigten Leitungen des Milchschäumers und einem Andockelement. Das Andockelement weist einen Andockelementkörper auf, der durch ein Andockelementgehäuse 26 geschützt ist. Der Andockelementkörper wird durch einen Grundkörper 25 und ein Ergänzungsteil 27 gebildet. Das Ergänzungsteil 27 weist unter anderem einen nach unten ragenden Milchschaumauslauf 28 auf; im Grundkörper 25 oder eventuell im Ergänzungsteil ist auch die erwähnte Mischdüse 79 (siehe Fig. 10) angeordnet.

**Figur 4** zeigt eine Ansicht von oben der entlang einer über der von der Dichtung 21 definierten Dichtungsebene liegenden Ebene geschnittenen Milchschäumeinheit 5.

Die helleren Linien stellen in der Ansicht an sich nicht sichtbare, weiter unten verlaufende Elemente dar.

Die Zahnradpumpe ist oberhalb der Dichtungsebene angebracht. Zur Zahnradpumpe hin führt eine oberseitige Flüssigkeitsleitung 31. Diese ist über von der Dichtung 21 gebildete Lippenventile 42, 41, die auch in **Figur 5** gut sichtbar sind, mit dem Milchansaugrohr 18 einerseits und einer Heisswasser- und/oder Dampfeinspeisungsleitung 32 andererseits verbunden. Ebenfalls über ein von der Dichtung gebildetes Lippenventil 43 ist eine Luftzuführleitung 34 mit der oberseitigen Flüssigkeitsleitung bzw. eingangsseitig mit der Zahnradpumpe verbunden.

Hinter der Zahnradpumpe ist eine Durchführung 36 für die geförderte und je nach gewähltem Betriebszustand bereits geschäumte Milch angeordnet, durch welche diese durch die Dichtungsebene wieder nach unten gelangt, wo sie durch eine Wegführleitung 35 ins Andockelement und dort in die Mischdüse gelangt.

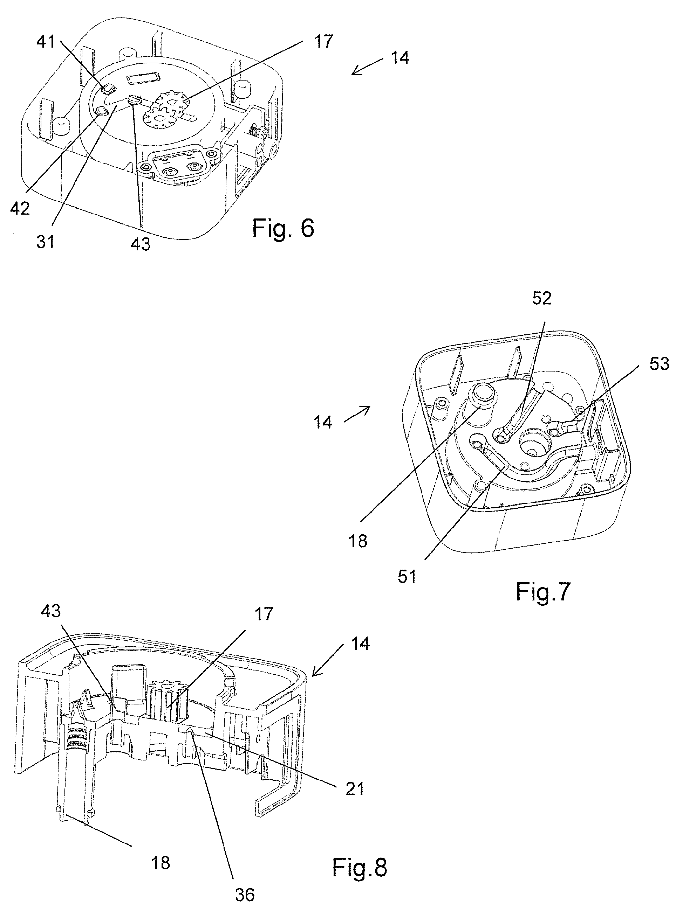

**Figuren 6 bis 8** zeigen weitere Ansichten des oberen Grundgehäuseteils 14, das in Fig. 6 entlang einer horizontalen und in Fig. 8 entlang einer vertikalen Ebene angeschnitten und in Fig. 7 in einer Unteransicht dargestellt ist.

Die unterseitigen Leitungen werden durch Schläuche des Anschlussformteils 22 gebildet, die in entsprechende Kanäle des oberen Grundgehäuseteils 14 eingelegt sind. In der Unteransicht gemäss Fig. 7 sind diese, d.h. der Kanal 51 für die Heisswasser- und/oder Dampfeinspeisungsleitung 32, der Kanal 52 für die Luftzuführleitung 34 und der Kanal 53 für die Wegführleitung 35, besonders gut sichtbar.

Die Dichtung 21 (Fig. 8) ist zwischen das obere Grundgehäuseteil 14 und den Milchschäumeinheit-Deckel (in Fig. 8 nicht gezeichnet) geklemmt. Zwischen dem Milchschäumeinheit-Deckel und dem oberen Grundgehäuseteil ist aufgrund der Wölbung 15 im Milchschäumeinheit-Deckel (Fig. 3) die Pumpenkammer der Zahnradpumpe ausgebildet, welche die Zahnräder 17 umfasst.

**Figur 9** zeigt eine Ansicht der ganzen Getränkezubereitungsmaschine 100 mit dem Milchschäumergerät 1 und einer als Kaffeemaschine 101 ausgebildeten Grundeinheit, an welche das Milchschäumergerät 1 angekoppelt ist.

Die Kaffeemaschine weist wie an sich für Kaffeemaschinen bekannt einen Wasserbehälter, eine Wasserpumpe und einen Wassererhitzer auf. Weiter ist eine Brühkammer zum Zubereiten von Kaffee aus erhitztem Wasser durch Extraktion aus Kaffeepulver vorhanden, welches Kaffeepulver beispielsweise in Portionskapseln zur Verfügung gestellt wird, die vor der Zubereitung in die Kaffeemaschine eingeworfen werden. Alternativ zu einem Portionskapselsystem kann die Kaffeemaschine auch als sogenannter Kaffeevollautomat ausgebildet sein, welcher auch eine Kaffeemühle aufweist und das Kaffeepulver portionsweise mahlt und der Brühkammer zuführt. Als noch weitere Alternative - insbesondere wenn die Kaffeemaschine als Kolbenmaschine ausgebildet ist, d.h. die Brühkammer zwischen einem festen Teil und einem entfernbaren Kolben ausgebildet ist, kann auch vorgesehen sein, dass das Kaffeepulver vom Benutzer im bereits gemahlenen Zustand, aber lose in die Brühkammer eingebracht wird.

Weiter kann die Kaffeemaschine einen Auffangbehälter für verbrauchte Kaffeepulverportionen (in Kapseln oder lose, je nach Ausgestaltung der Kaffeemaschine) aufweisen.

An der Kaffeemaschine ist eine Abstellplattform 103 zum Abstellen eines Trinkgefässes ausgebildet. Über der Abstellplattform 103 befindet sich ein Kaffeeauslauf 105, durch welchen der gebrühte Kaffee ausläuft und in das darunter liegende Gefäss gelangt. Dieser befindet sich unter einer Auslaufhaube 108, welche einen Teil des Kaffeemaschinengehäuses bildet und den Auslauf nach vorne und zu den Seiten hin mindestens teilweise abdeckt. In der Nähe des Kaffeeauslaufs 105 und hier unter der Auslaufhaube befindet sich eine Anschlussstelle 110 zum Anschliessen des Andockelements an die Kaffeemaschine. Diese Anschlussstelle weist eine Dampfabgabestelle zum Koppeln an den Dampfanschluss des Andockelements und eine Heisswasser- und/oder Dampfabgabestelle zum Koppeln (via eine Leitung im Andockelement) an die Heisswasser- und/oder Dampfeinspeisungsleitung 32 auf. Die Dampfabgabestelle und die Heisswasser- und/oder Dampfabgabestelle werden bei Bedarf vom Wassererhitzer her mit Dampf bzw. Heisswasser versorgt, wobei ein Mehrwegeventil im Innern der Kaffeemaschine erhitzte Flüssigkeit bzw. Dampf wahlweise dem Brühmodul, der Dampfabgabestelle oder der Heisswasser- und/oder Dampfabgabestelle zuführen kann.

Das Andocken des Milchschäumergeräts 1 erfolgt von der Seite her an die Auslaufhaube 108, und zwar so, dass das Milchschäumergerät als Ganzes vor der Kaffeemaschine und seitlich der Auslaufhaube 108 angeordnet ist.

Weiter weist die Anschlussstelle elektrische Kontakte auf. Diese elektrischen Kontakte bilden eine Schnittstelle und stellen bei angekoppeltem Andockelement eine elektrische Verbindung zu entsprechenden elektrischen Anschlusselementkontakten her, welche mit durch das Andockelement führenden elektrischen Leitern verbunden sind oder durch diese gebildet werden. Diese elektrischen Leiter versorgen die elektrisch angetriebenen Elemente des Milchschäumergeräts, namentlich die Zahnradpumpe, mit Strom und gegebenenfalls Steuersignalen.

Dabei ist sowohl möglich, eine Steuerung dieser elektrisch angetriebenen Elemente im Milchschäumergerät vorzusehen (dieses ist dann mit den nötigen elektronischen Einheiten versehen und empfängt Steuerungssignale von der Kaffeemaschine oder von einer Eingabeeinheit des Milchschäumergeräts her), als auch eine Steuerung dieser Elemente in der Grundeinheit selbst unterzubringen. Im letzteren Fall werden durch die elektrischen Leitungen im Wesentlichen lediglich Ströme geleitet, welche die elektrisch angetriebenen Elemente entsprechend den Vorgaben der Steuerung antreiben.

Die Steuerung der Zahnradpumpe ist insbesondere so eingerichtet, dass die Drehzahl der Zahnräder 17 verstellbar, d.h. anwählbar ist. Dadurch kann der Benutzer die Fördergeschwindigkeit und - gemäss dem nachstehend noch eingehender beschriebenen Vorgehen - gegebenenfalls die Zubereitung von kalter geschäumter Milch steuern.

**Figur 10** zeigt ein Übersichtsschema des Milchschäumergeräts und von dessen Ankopplung an die Grundeinheit (Kaffeemaschine 101). In der Figur bezeichnet "L" Luftzuführungen. Der Buchstabe D bezeichnet eine Leitung für Dampf, K eine Leitung für das Heissgetränk, R die Leitung für Reinigungswasser- oder Dampf, die teilweise durch die Heisswasser- und/oder Dampfeinspeisungsleitung 32 gebildet wird, und S bezeichnet die Stromversorgung. Dampf, der über den Dampfanschluss in die Dampfzuführleitung D; 90 eingespeist wird gelangt bspw. via ein Ventil in die Mischdüse 79.

Die Ansteuerung 195 ist hier als Teil einer Elektronikeinheit 121 (Steuerungseinheit) der Kaffeemaschine 101 dargestellt. Die Elektronikeinheit 121 ist bspw. eingerichtet, durch eine Messung eine Kapsel zu erkennen und/oder eine Benutzereingabe entgegenzunehmen, bspw. über ein geeignetes Bedienelement mit einer entsprechenden Taste, einem Touch Screen und/oder dergleichen.

Die Ansteuerung 195 ist hier so ausgebildet, dass sie sowohl die Zahnradpumpe 7 als auch die Ventileinheit 20 ansteuern kann, wobei ein Betriebsparameter des Zahnrads und/oder der Ventileinheit regelbar ist. Über die Anschlussstelle 110 laufen direkt Ansteuersignale für die Ventileinheit 20 und/oder die Zahnradpumpe 7.

Alternativ zum Anbringen der Ansteuerung ganz oder teilweise in der Kaffeemaschine kann eine Ansteuerung 195' auch ganz oder teilweise als Teil des Milchschäumergeräts vorhanden sein. Diese Alternative ist in der Figur 20 gestrichelt dargestellt. Über die alternative Schnittstelle 110' werden dann elektrische Energie und ggf. Datensignale von der Elektronikeinheit an die Ansteuerung 195' übertragen.

Das Milchschäumergerät kann wie folgt betrieben werden:
Für die Zubereitung von geschäumter Milch werden, sofern die Zahnradpumpe trocken ist zunächst die Zahnräder 17 benetzt. Zu diesem Zweck wird der Zahnradpumpe durch die Ansteuerung 195 gesteuert eine Benetzungsmenge Wasser - in flüssiger und/oder Dampfform - über die Reinigungsleitung R zugeführt, insbesondere durch Förderung durch die Wasserpumpe der Kaffeemaschine unter gleichzeitigem Betrieb der Wassererhitzungsmittel und/oder aufgrund des Dampfdrucks von in den Wassererhitzungsmitteln erzeugtem Dampf.

Alternativ oder ergänzend zum Benetzen via die Reinigungsleitung R kann auch Dampf über die Dampfzuführleitung 90 in die Mischdüse 79 gespeist werden und von dort zur Zahnradpumpe gelangen, wo die Zahnräder durch Kondensation des Dampfs ebenfalls benetzt werden; auch die Förderung von Dampf erfolgt durch die Wasserpumpe und/oder den Dampfdruck.

Anschliessend an das Benetzen wird die Zahnradpumpe in Gang gesetzt, während bspw. via die Ventileinheit 20 (alternativ via eine Ventileinheit in der Grundeinheit 101 und eine entsprechende das Andockelement durchquerende Leitung) Luft angesaugt wird. Durch die Wirkung der Zahnradpumpe wird an deren Eingangsseite ein Unterdruck erzeugt, welcher sowohl Milch - durch das Milchansaugrohr 18 und das entsprechende Lippenventil 42 - als auch die Luft ansaugt. Um die Sicherheit des Ansaugens von Milch zu erhöhen, kann das Luftventil zunächst für 1-3 s geschlossen bleiben und somit zunächst Milch in die Pumpe gesaugt werden. Sobald das Luftventil geöffnet wird entsteht dann in der Zahnradpumpe so Milchschaum, der durch die Durchführung 36 - deren Enge die Bildung von feinporigem Schaum begünstigt -, die Wegführleitung und das Andockelement 25 zum Milchschaumauslauf 28 gelangt und dort abgegeben wird, wobei im Allgemeinen ein Trinkgefäss 200 auf die Plattform 103 abgestellt wird.

Sofern die Milch nur gefördert und nicht geschäumt werden soll, erfolgt der Betriebe der Zahnradpumpe ohne das Ansaugen von Luft (geschlossene Ventileinheit).

Auch für die Zubereitung von warmer geschäumter oder ungeschäumter Milch erfolgt das Ansaugen der - im Allgemeinen kalten - Milch aus dem Milchbehälter 3 über die Zahnradpumpe. Diese fördert die Milch in die Mischdüse. Dieser wird gleichzeitig von der Kaffeemaschine her über den Dampfanschluss Wasserdampf zugeführt. Optional kann auch dieser - ergänzend oder alternativ zur Zuführung von Luft zur Zahnradpumpe - Luft zugeführt werden. In der Mischdüse 79 wird die Milch mit dem Wasserdampf vermischt, was sie erwärmt. Auch die warme, geschäumte oder ungeschäumte Milch wird durch den Milchschaumauslauf abgegeben.

Wenn die Zahnradpumpe bereits feucht ist - was bspw. dann der Fall sein wird, wenn seit der letzten Ingangsetzung bzw. seit dem letzten Aufwachen aus einem Schlafmoduls bereits eine Benetzung und/oder ein Gebrauch stattgefunden hat, ohne dass zwischenzeitlich das Milchschäumergerät entfernt worden wäre - kann der Schritt des Benetzens entfallen. Auch andere Kriterien können herangezogen werden um festzustellen, ob die Zahnradpumpe trocken ist oder ob die Zahnräder bereits befeuchtet sind - bspw. die durch einen Timer gemessene Zeit seit der letzten Benutzung/Benetzung der Zahnradpumpe, eine Feuchtigkeitsmessung, eine mit einem kurzen Testlauf verbundene Messung (bspw. mit einem Erschütterungssensor, der ein anderes Muster feststellt, wenn die Zahnradpumpe leckt als wenn sie bestimmungsgemäss läuft), etc.

Im dargestellten Ausführungsbeispiel bildet die Getränkezubereitungsmaschine 100 mit Grundeinheit und Milchschäumergerät das erfindungsgemässe Milchschäumersystem. Alternativ wäre es auch möglich, ein Milchschäumergerät vorzusehen, welches selbst eine Steuerung, einen Stromanschluss und einen Wassererhitzer bzw. Dampferzeuger aufweist, ohne Anschluss an eine Grundeinheit funktioniert und erfindungsgemäss eingerichtet ist, die Zahnräder der Zahnradpumpe vor einem Betrieb zu benetzen, insbesondere wenn sie trocken sind.

### Bezugszeichenliste:

- 1: Milchschäumergerät
- 3: Milchbehälter
- 5: Milchschäumeinheit
- 6: Deckel
- 7: Zahnradpumpe
- 11: unteres Grundgehäuseteil
- 12: Fenster
- 13: Elektromotor
- 14: oberes Grundgehäuseteil
- 15: Wölbung (im Milchschäumeinheit-Deckel)
- 16: Milchschäumeinheit-Deckel
- 17: Zahnräder
- 18: Milchansaugrohr
- 19: Welle
- 20: Ventileinheit
- 21: Dichtung
- 22: Anschlussformteil
- 23: Abstandhalter
- 24: Motordichtungselement
- 25: Grundkörper (des Andockelements)
- 26: Andockelementgehäuse
- 27: Ergänzungsteil
- 28: Milchschaumauslauf
- 31: Flüssigkeitsleitung
- 32: Heisswasser- und/oder Dampfeinspeisungsleitung
- 34: Luftzuführleitung
- 35: Wegführleitung
- 36: Durchführung
- 41: Lippenventil
- 42: Lippenventil
- 43: Lippenventil
- 51: Kanal für die Heisswasser- und/oder Dampfeinspeisungsleitung
- 52: Kanal für die Luftzuführleitung
- 53: Kanal für die Wegführleitung
- 79: Mischdüse
- 90: Dampfzuführleitung in die Mischdüse
- 100: Getränkezubereitungsmaschine
- 101: Kaffeemaschine
- 103: Abstellplattform
- 105: Kaffeeauslauf
- 106: Front
- 107: Milchschäumeiplattform
- 108: Auslaufhaube
- 110: Anschlussstelle
- 110': alternative Schnittstelle
- 121: Elektronikeinheit
- 195: Ansteuerung
- 195': alternative Ansteuerung
- 200: Trinkgefäss

## Patentansprüche

1. Milchschäumersystem, aufweisend eine Zahnradpumpe (7), die eingangsseitig mindestens mit einer Milchzuführleitung (18) verbunden ist, welche ihrerseits mit einem mit Milch gefüllten Milchgefäss (3) verbindbar ist, wodurch durch die Zahnradpumpe Milch aus dem Milchgefäss ansaugbar ist, und weiterhin aufweisend eine Zuführleitung (32; 90) für Wasser und/oder Dampf zur Zahnradpumpe, **dadurch gekennzeichnet, dass** das Milchschäumersystem eingerichtet ist, unter vorgegebenen Voraussetzungen vor einer Förderung von Milch durch die Zahnradpumpe Wasser und/oder Wasserdampf via die Zuführleitung (32; 90) zur Zahnradpumpe (7) zu fördern, um diese zu benetzen.

2. Milchschäumersystem nach Anspruch 1, aufweisend ein Milchgefäss (3), welches weiter unten angeordnet ist als die Zahnradpumpe (7).

3. Milchschäumersystem nach Anspruch 1 oder 2, aufweisend eine Steuerungseinheit, die programmiert ist, vor einer Förderung von Milch durch die Zahnradpumpe dann Wasser und/oder Wasserdampf zur Zahnradpumpe zu fördern, wenn das System nach dem letzten Betrieb der Zahnradpumpe eingeschaltet wurde, aus einem Standby- oder Schlafmoduls aufgeweckt wurde, oder wenn ein die Zahnradpumpe aufweisendes Milchschäumergerät (1) von einer Grundeinheit (101) entfernt wurde.

4. Milchschäumersystem nach einem der vorangehenden Ansprüche, wobei die Zahnräder (17) der Zahnradpumpe (7) mit einem fluorhaltigen Polymer beschichtet sind oder aus diesem bestehen.

5. Milchschäumersystem nach einem der vorangehenden Ansprüche, aufweisend ein Luftzuführmittel zur Zuführung von Luft zu einer Eingangsseite der Zahnradpumpe.

6. Milchschäumersystem nach einem der vorangehenden Ansprüche mit einer Milchschäumervorrichtung (1), welche die Zahnradpumpe (7) aufweist, sowie mit einer Grundeinheit (101) mit einer Wasserpumpe und einem Wassererhitzungsmittel, wobei das Wasser und/oder der Wasserdampf für die Benetzung der Zahnradpumpe durch die Grundeinheit förderbar und über eine Schnittstelle in die Zuführleitung (32; 90) abgebbar ist.

7. Milchschäumersystem nach Anspruch 6, wobei die Grundeinheit (101) als Kaffeemaschine zum Zubereiten von Kaffee aus in einer Portionsverpackung vorhandenem Kaffeepulver und heissem Wasser ist.

8. Milchschäumersystem nach einem der vorangehenden Ansprüche, aufweisend eine ausgangsseitig an die Zahnradpumpe anschliessende Mischdüse, welcher von der Zahnradpumpe (7) geförderte Milch, Wasserdampf und optional Luft zuführbar sind.

9. Verfahren zum Betreiben eines Milchschäumersystems, mit einer Zahnradpumpe (7), die eingangsseitig mindestens mit einer Milchzuführleitung (18) verbunden ist, welche ihrerseits mit einem mit Milch gefüllten Milchgefäss (3) verbindbar ist, und weiterhin aufweisend eine Zuführleitung (32; 90) für Wasser und/oder Dampf zur Zahnradpumpe, gemäss welchem Verfahren nach Auslösung durch einen Benutzer die Zahnradpumpe Milch aus dem Milchgefäss ansaugt und von dort weiterfördert, **dadurch gekennzeichnet, dass** unter vorgegebenen Voraussetzungen nach der Auslösung und vor der Förderung der Milch Wasser und/oder Wasserdampf via die Zuführleitung (32; 90) zur Zahnradpumpe (7) gefördert wird, um diese zu benetzen.

10. Verfahren nach Anspruch 9, wobei vor der Förderung der Milch dann Wasser und/oder Wasserdampf zur Zahnradpumpe gefördert wird, wenn das System nach dem letzten Betrieb der Zahnradpumpe eingeschaltet wurde, aus einem Standby- oder Schlafmoduls aufgeweckt wurde, oder wenn ein die Zahnradpumpe aufweisendes Milchschäumergerät (1) von einer Grundeinheit (101) entfernt wurde.

11. Verfahren nach Anspruch 9 oder 10, wobei vor der Förderung der Milch dann Wasser und/oder Wasserdampf zur Zahnradpumpe gefördert wird, wenn seit dem letzten Betrieb der Zahnradpumpe mehr als eine vorgegebene Zeit vergangen ist.

12. Verfahren nach einem der Ansprüche 9 bis 11, wobei ein Flüssigkeitsvolumen des unter den vorgegebenen Bedingungen geförderten Wassers und/oder Wasserdampfs zwischen 1 ml und 10 ml beträgt.
